# EUROPEAN PATENT APPLICATION

(11) **EP 4 814 876 A1**
(43) Date of publication of application: **30.09.2026**
(21) Application number: 26167273.7
(22) Date of filing: 24.03.2026
(51) Int. Cl.: G06T 12/10

(54) **MOTION COMPENSATION APPARATUS AND MOTION COMPENSATION METHOD**

(30) Priority: 24.03.2025 US 202519088507; 06.03.2026 JP 2026036541
(71) Applicant: Canon Medical Systems Corporation, Tochigi 324-0036 (JP)
(72) Inventor: TANG, Qiulin, Tokyo (JP); ZHOU, Jian, Tokyo (JP); CAI, Liang, Tokyo (JP); LIU, Chih-Chieh, Otawara-shi (JP)
(74) Representative: Marks & Clerk LLP

(57) **Abstract**

A motion compensation apparatus according to an embodiment, includes an acquisition unit (110), a determination unit (120), a first reconstruction unit (120), a estimation unit (130) and a second reconstruction unit (140). The acquisition unit (110) acquires projection data scanned from an imaging object by the computed tomography imaging system. The determination unit (120) determines a target time point for which a motion-corrected image of the imaging object is to be reconstructed. The first reconstruction unit (120) reconstructs first and second groups of feature-enhanced partial images, based on, respectively, first and second sets of the projection data, the first and second sets of the projection data being on opposite sides of the target time point. The estimation unit (130) is configured to estimate a motion vector field for the target time point, based on the first and second groups of feature-enhanced partial images. The second reconstruction unit (140) is configured to perform, based on the motion vector field, motion compensation on the projection data to reconstruct an image of the imaging object, as the motion-corrected image for the target time point.

## Description

### FIELD

Embodiments disclosed in the specification and drawings relate generally to a motion compensation apparatus and a motion compensation method.

### BACKGROUND

Motion artifacts are among the most significant challenges in computed tomography (CT) imaging, particularly in cases where motion is difficult to estimate. In medical imaging, two primary types of motion are typically encountered: respiratory motion and cardiac motion. Respiratory motion involves the movement of the lungs and surrounding structures during breathing, while cardiac motion refers to the movement of the heart and associated blood vessels as they contract and relax.

Cardiac CT is particularly challenging because the heart is constantly moving, with both regular and irregular motion patterns. As a result, advanced imaging techniques are needed to generate accurate cardiac images. Without adequate compensation for the motion, images are often distorted or blurred, compromising the diagnostic value of the scan.

Typically, compensation methods for restoring the image quality are applied to mitigate the influence of artifacts induced by cardiac motion. Most of these methods have two major phases: (1) estimation of cardiac motion, and (2) incorporation of the estimated motion into the image reconstruction process to counter motion artifacts. The performance of these motion compensation methods is mainly determined by the accuracy of the motion-estimation phase.

Thus, it is desirable to enhance current motion estimation and compensation approaches.

A motion compensation apparatus for performing motion compensation in a computed tomography imaging system, the motion compensation apparatus comprising:
an acquisition unit configured to acquire projection data scanned from an imaging object by the computed tomography imaging system;
a determination unit configured to determine a target time point for which a motion-corrected image of the imaging object is to be reconstructed;
a first reconstruction unit configured to reconstruct a first group of feature-enhanced partial images and a second group of feature-enhanced partial images, based on, respectively, a first set of the projection data and a second set of the projection data, the first and second sets of the projection data being on opposite sides of the determined target time point;
a estimation unit configured to estimate a motion vector field for the determined target time point, based on the reconstructed first group of feature-enhanced partial images and the reconstructed second group of feature-enhanced partial images; and
a second reconstruction unit configured to perform, based on the estimated motion vector field, motion compensation on the acquired projection data to reconstruct an image of the imaging object, as the motion-corrected image for the determined target time point.

The first reconstruction unit may be further configured to reconstruct the first group of feature-enhanced partial images and the second group of feature-enhanced partial images by:
performing feature enhancement on the acquired projection data to enhance feature information in the acquired projection data to generate feature-enhanced projection data, wherein the feature information corresponds to an edge of a physiologic structure of the imaging object,
determining a first time period before the determined target time point and a second time period after the determined target time point, wherein the second time period has a same length as the first time period,
separating the first time period into a first plurality of time intervals, and the second time period into a second plurality of time intervals,
performing partial reconstruction using the featured-enhanced projection data associated with each time interval of the first plurality of time intervals, to generate a first plurality of partial images, as the first group of feature-enhanced partial images, wherein each partial image of the first plurality of partial images corresponds to a different time interval of the first plurality of time intervals,
performing partial reconstruction using the featured-enhanced projection data associated with each time interval of the second plurality of time intervals, to generate a second plurality of partial images, as the second group of feature-enhanced partial images, wherein each partial image of the second plurality of partial images corresponds to a different time interval of the second plurality of time intervals.

The first reconstruction unit may be further configured to conduct high-pass filtering on the acquired projection data, or conduct a derivation operation on the acquired projection data, to enhance the feature information in the acquired projection data.

The first reconstruction unit may be further configured to set the length of the first time period to a predefined length.

The first reconstruction unit may be further configured to set the length of the first time period based on the enhanced feature information.

The first reconstruction unit may be further configured to determine the target time point by:
from a user of the computed tomography imaging system, receiving an input indicating for which phase of a motion cycle of the imaging object the motion-corrected image is to be reconstructed, and
determining the target time point based on the received input.

The estimation unit may be further configured to estimate the motion vector field by:
iteratively performing until a predefined termination criterion is met:
   based on a motion model, warping the first plurality of partial images to generate a first plurality of warped partial images,
   based on the motion model, warping the second plurality of partial images to generate a second plurality of warped partial images,
   combining the first plurality of warped partial images to obtain a first image,
   combining the second plurality of warped partial images to obtain a second image, and
   updating a parameter of the motion model, based on a loss function calculated based on an image registration between the first image and the second image, and
outputting a motion vector field derived based on the updated motion model, as the estimated motion vector field.

The estimation unit may be further configured to set, for a first iteration, the parameter of the motion model at a predefined initial value.

The estimation unit may be further configured to use a particular motion model constructed based on a polynomial function or a B-spline function, as the motion model.

The estimation unit may be further configured to estimate the motion vector field by:
inputting the first plurality of partial images and the second plurality of partial images into a neural network to train the neural network, and
obtaining a motion vector field inferred for the determined target time point by the trained neural network, as the estimated motion vector field.

A motion compensation method for performing motion compensation in a computed tomography imaging system, comprising:
a step of acquiring projection data scanned from an imaging object by the computed tomography imaging system;
a step of determining a target time point for which a motion-corrected image of the imaging object is to be reconstructed;
a step of reconstructing a first group of feature-enhanced partial images and a second group of feature-enhanced partial images, based on, respectively, a first set of the projection data and a second set of the projection data, the first and second sets of the projection data being on opposite sides of the determined target time point;
a step of estimating a motion vector field for the determined target time point, based on the reconstructed first group of feature-enhanced partial images and the reconstructed second group of feature-enhanced partial images; and
a step of performing, based on the estimated motion vector field, motion compensation on the acquired projection data to reconstruct an image of the imaging object, as the motion-corrected image for the determined target time point.

The step of reconstructing the first group of feature-enhanced partial images and the second group of feature-enhanced partial images may further comprise:
performing feature enhancement on the acquired projection data to enhance feature information in the acquired projection data to generate feature-enhanced projection data, wherein the feature information corresponds to an edge of a physiologic structure of the imaging object,
determining a first time period before the determined target time point and a second time period after the determined target time point, wherein the second time period has a same length as the first time period,
separating the first time period into a first plurality of time intervals, and the second time period into a second plurality of time intervals,
performing partial reconstruction using the featured-enhanced projection data associated with each time interval of the first plurality of time intervals, to generate a first plurality of partial images, as the first group of feature-enhanced partial images, wherein each partial image of the first plurality of partial images corresponds to a different time interval of the first plurality of time intervals,
performing partial reconstruction using the featured-enhanced projection data associated with each time interval of the second plurality of time intervals, to generate a second plurality of partial images, as the second group of feature-enhanced partial images, wherein each partial image of the second plurality of partial images corresponds to a different time interval of the second plurality of time intervals.

The step of performing the feature enhancement may further comprise conducting high-pass filtering on the acquired projection data, or conducting a derivation operation on the acquired projection data, to enhance the feature information in the acquired projection data.

The step of determining the first time period and the second time period may further comprise setting the length of the first time period to a predefined length.

The step of determining the first time period and the second time period may further comprise setting the length of the first time period based on the enhanced feature information.

The step of determining the target time point may further comprise:
from a user of the CT imaging system, receiving an input indicating for which phase of a motion cycle of the imaging object the motion-corrected image is to be reconstructed, and
determining the target time point based on the received input.

The step of estimating the motion vector field may further comprise:
iteratively performing until a predefined termination criterion is met:
   based on a motion model, warping the first plurality of partial images to generate a first plurality of warped partial images,
   based on the motion model, warping the second plurality of partial images to generate a second plurality of warped partial images,
   combining the first plurality of warped partial images to obtain a first image,
   combining the second plurality of warped partial images to obtain a second image, and
   updating a parameter of the motion model, based on a loss function calculated based on an image registration between the first image and the second image, and
outputting a motion vector field derived based on the updated motion model, as the estimated motion vector field.

The step of estimating the motion vector field may further comprise: for a first iteration, setting the parameter of the motion model at a predefined initial value.

The step of estimating the motion vector field may further comprise using a particular motion model constructed based on a polynomial function or a B-spline function, as the motion model.

A motion compensation apparatus for performing motion compensation in a computed tomography imaging system, the motion compensation apparatus comprising:
an acquisition unit configured to acquire projection data scanned from a first imaging object by the computed tomography imaging system;
a determination unit configured to determine a first target time point for which a motion-corrected image of the first imaging object is to be reconstructed;
a first reconstruction unit configured to reconstruct a first group of feature-enhanced partial images and a second group of feature-enhanced partial images, based on, respectively, a first set of the projection data and a second set of the projection data, the first and second sets of the projection data being on opposite sides of the determined first target time point;
a estimation unit configured to input the reconstructed first group of feature-enhanced partial images and the reconstructed second group of feature-enhanced partial images to an input of a pre-trained neural network to estimate a motion vector field for the determined first target time point; and
a second reconstruction unit configured to perform, based on the estimated motion vector field, motion compensation on the acquired projection data to reconstruct an image of the first imaging object, as the motion-corrected image for the determined first target time point; wherein
the pre-trained neural network was trained using a third group of feature-enhanced partial images and a fourth group of feature-enhanced partial images reconstructed based on, respectively, a first set of projection data acquired from a second imaging object and a second set of the projection data acquired from the second imaging object, the first and second sets of the projection data acquired from the second imaging object being on opposite sides of a second target time point, and
the second imaging object is a same or different imaging object as the first imaging object.

### BRIEF DESCRIPTION OF THE DRAWINGS

The application will be better understood in light of the description which is given in a non-limiting manner, accompanied by the attached drawings in which:
FIG. 1 shows a block diagram of an exemplary apparatus for performing motion compensation in a computed tomography (CT) imaging system, in accordance with embodiments of the disclosure;
FIG. 2 shows a flow chart of an exemplary procedure for performing motion compensation in a CT imaging system, in accordance with embodiments of the disclosure;
FIG. 3 shows a block diagram of feature-enhanced partial reconstruction circuitry in accordance with embodiments of the disclosure;
FIG. 4 shows an exemplary scenario in which 16 feature-enhanced partial images are reconstructed, in accordance with embodiments of the disclosure;
FIG. 5 shows a flow chart of an exemplary procedure for reconstructing feature-enhanced partial images in accordance with embodiments of the disclosure;
FIG. 6 shows a block diagram of motion vector field estimation circuitry in accordance with embodiments of the disclosure;
FIG. 7 shows an exemplary image pair used for motion vector field estimation in accordance with embodiments of the disclosure;
FIG. 8 shows a flow chart of an exemplary procedure for estimating the motion vector field in accordance with embodiments of the disclosure;
FIGs. 9A and 9B show an exemplary scenario in which a neural network is used to estimate the motion vector field, in accordance with one embodiment of the disclosure; and
FIG. 10 shows a schematic block diagram of an exemplary CT imaging system that can incorporate the techniques disclosed herein.

### DETAILED DESCRIPTION

A motion compensation apparatus for performing motion compensation in a computed tomography imaging system, according to an embodiment, includes an acquisition unit, a determination unit, a first reconstruction unit, a estimation unit and a second reconstruction unit. The acquisition unit is configured to acquire projection data scanned from an imaging object by the computed tomography imaging system. The determination unit is configured to determine a target time point for which a motion-corrected image of the imaging object is to be reconstructed. The first reconstruction unit is configured to reconstruct a first group of feature-enhanced partial images and a second group of feature-enhanced partial images, based on, respectively, a first set of the projection data and a second set of the projection data, the first and second sets of the projection data being on opposite sides of the determined target time point. The estimation unit is configured to estimate a motion vector field for the determined target time point, based on the reconstructed first group of feature-enhanced partial images and the reconstructed second group of feature-enhanced partial images. The second reconstruction unit is configured to perform, based on the estimated motion vector field, motion compensation on the acquired projection data to reconstruct an image of the imaging object, as the motion-corrected image for the determined target time point.

Disclosed is an apparatus for performing motion compensation in a computed tomography (CT) imaging system. The apparatus includes processing circuitry configured to acquire projection data scanned from an imaging object by the CT imaging system, determine a target time point for which a motion-corrected image of the imaging object is to be reconstructed, and reconstruct a first group of feature-enhanced partial images and a second group of feature-enhanced partial images, based on, respectively, a first set of the projection data and a second set of the projection data. The first and second sets of the projection data are on opposite sides of the determined target time point. The processing circuitry is further configured to estimate a motion vector field for the determined target time point, based on the reconstructed first group of feature-enhanced partial images and the reconstructed second group of feature-enhanced partial images, and perform, based on the estimated motion vector field, motion compensation on the acquired projection data to reconstruct an image of the imaging object, as the motion-corrected image for the determined target time point.

Also disclosed is a method for performing motion compensation in a CT imaging system. The method includes: acquiring projection data scanned from an imaging object by the CT imaging system; determining a target time point for which a motion-corrected image of the imaging object is to be reconstructed; reconstructing a first group of feature-enhanced partial images and a second group of feature-enhanced partial images, based on, respectively, a first set of the projection data and a second set of the projection data, the first and second sets of the projection data being on opposite sides of the determined target time point; estimating a motion vector field for the determined target time point, based on the reconstructed first group of feature-enhanced partial images and the reconstructed second group of feature-enhanced partial images; and performing, based on the estimated motion vector field, motion compensation on the acquired projection data to reconstruct an image of the imaging object, as the motion-corrected image for the determined target time point.

Also disclosed is an apparatus for performing motion compensation in a CT imaging system. The apparatus includes processing circuitry configured to: acquire projection data scanned from a first imaging object by the CT imaging system, determine a first target time point for which a motion-corrected image of the first imaging object is to be reconstructed, reconstruct a first group of feature-enhanced partial images and a second group of feature-enhanced partial images, based on, respectively, a first set of the projection data and a second set of the projection data, the first and second sets of the projection data being on opposite sides of the determined first target time point, input the reconstructed first group of feature-enhanced partial images and the reconstructed second group of feature-enhanced partial images to an input of a pre-trained neural network to infer a motion vector field for the determined first target time point, and perform, based on the inferred motion vector field, motion compensation on the acquired projection data to reconstruct an image of the first imaging object, as the motion-corrected image for the determined first target time point. The pre-trained neural network was trained using a third group of feature-enhanced partial images and a fourth group of feature-enhanced partial images reconstructed based on, respectively, a first set of projection data acquired from a second imaging object and a second set of the projection data acquired from the second imaging object. The first and second sets of the projection data acquired from the second imaging object are on opposite sides of a second target time point. The second imaging object is a same or different imaging object as the first imaging object.

Note that the above description does not specify every embodiment and/or incrementally novel aspect of the present disclosure. Instead, the above description only provides a preliminary discussion of different embodiments and corresponding points of novelty. For additional details and/or possible perspectives of the disclosure and embodiments, the reader is directed to the Detailed Description section and corresponding figures of the present disclosure as further discussed below.

The following disclosure provides many different embodiments, or examples, for implementing different features of the provided subject matter. Specific examples of components and arrangements are described below to simplify the present disclosure. These are, of course, merely examples and are not intended to be limiting.

For example, the order of discussion of the different steps as described herein has been presented for the sake of clarity. In general, these steps can be performed in any suitable order. Additionally, although each of the different features, techniques, configurations, etc. herein may be discussed in different places of this disclosure, it is intended that each of the concepts can be executed independently of each other or in combination with each other. Accordingly, the present disclosure can be embodied and viewed in many different ways.

Furthermore, as used herein, the words "a," "an," and the like generally carry a meaning of "one or more," unless stated otherwise.

The present disclosure provides a feature-enhanced approach for motion estimation and compensation to generate motion-artifact-free computed tomography (CT) images. In this approach, multiple small partial images are generated to perform motion estimation and compensation. Because each of these partial images is reconstructed from a smaller amount of projection data, this approach can achieve improved temporal resolution, compared with approaches that rely on a pair of large partial images. Moreover, instead of directly using conventional partial images, this approach enhances or extracts edges and high-frequency information in the partial images, leading to more accurate motion estimation.

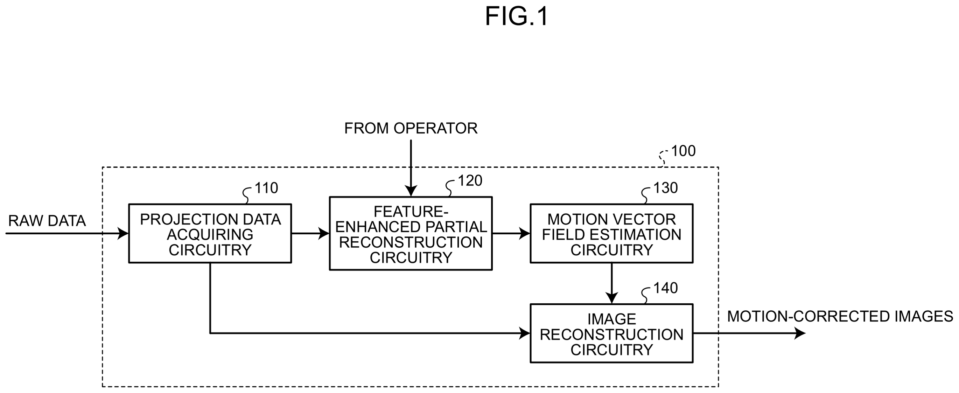

FIG. 1 shows a block diagram of an exemplary motion compensation apparatus 100 for performing motion compensation in a CT imaging system, in accordance with embodiments of the disclosure. The motion compensation apparatus 100 includes projection data acquiring circuitry 110, feature-enhanced partial reconstruction circuitry 120, motion vector field estimation circuitry 130, and image reconstruction circuitry 140. The projection data acquiring circuitry 110 is an example of the acquisition unit. The feature-enhanced partial reconstruction circuitry 120 is an example of the determination unit and the first reconstruction unit. The motion vector field estimation circuitry 130 is an example of the estimation unit. The image reconstruction circuitry 140 is an example of the second reconstruction unit.

The projection data acquiring circuitry 110 acquires projection data of an imaging object and sends the acquired data to both the feature-enhanced partial reconstruction circuitry 120 and the image reconstruction circuitry 140. The projection data can be raw projection data obtained by scanning the imaging object using the CT imaging system.

The feature-enhanced partial reconstruction circuitry 120 also receives inputs from the operator of the CT imaging system, and determines a target time point *Tᵣ* based on the operator's inputs. The target time point *Tᵣ* represents the moment for which a motion-corrected image is to be produced through motion estimation and compensation. Using the received projection data, the feature-enhanced partial reconstruction circuitry 120 reconstructs two groups of feature-enhanced partial images, one before the target time point *Tᵣ,* and the other after the target time point *Tᵣ.* These two groups of feature-enhanced partial images are then sent to the motion vector field estimation circuitry 130.

Based on the received groups of feature-enhanced partial images, the motion vector field estimation circuitry 130 estimates a motion vector field for the target time point *Tᵣ.* The estimated motion vector field is then sent to the image reconstruction circuitry 140.

Using the motion vector field received from the motion vector field estimation circuitry 130 and the raw projection data received from the projection data acquiring circuitry 110, the image reconstruction circuitry 140 reconstructs a motion-corrected image for the target time point *Tᵣ.* The image reconstruction circuitry 140 can apply various motion-compensated reconstruction algorithms to generate this image. By removing or mitigating motion artifacts based on the estimated motion vector field, the resulting image quality can be significantly enhanced.

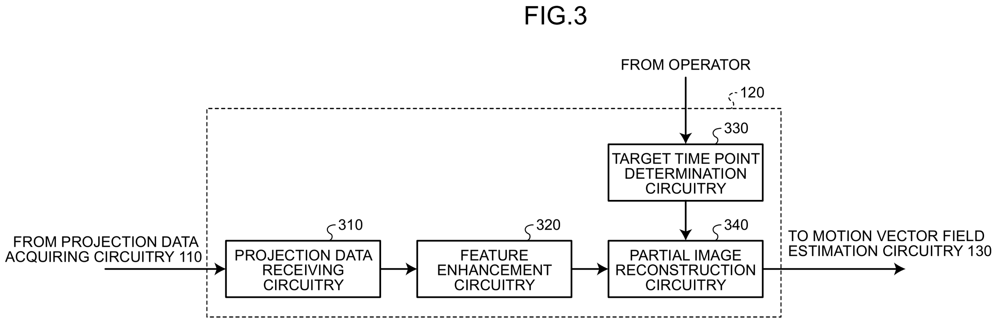

The structures and functionalities of the feature-enhanced partial reconstruction circuitry 120 and the motion vector field estimation circuitry 130 will be further described with reference to FIGs. 3-8.

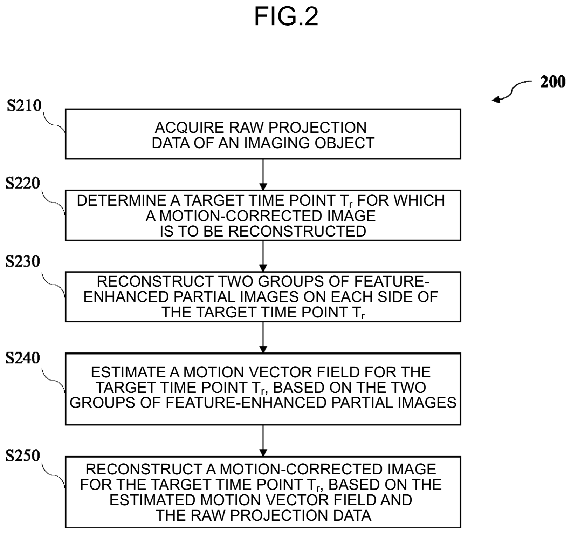

FIG. 2 shows a flow chart of an exemplary procedure 200 for performing motion compensation in a CT imaging system, in accordance with embodiments of the disclosure. In step S210, raw projection data of an imaging object is acquired. In step S220, a target time point *Tᵣ* for which a motion-corrected image is to be reconstructed is determined. In step S230, two groups of feature-enhanced partial images are reconstructed on each side of the determined target time point *Tᵣ.* In step S240, a motion vector field is estimated for the target time point *Tᵣ,* based on the two groups of feature-enhanced partial images. In step S250, a motion-corrected image is reconstructed for the target time point *Tᵣ,* based on the estimated motion vector field and the raw projection data.

FIG. 3 shows a block diagram of the feature-enhanced partial reconstruction circuitry 120 in accordance with embodiments of the disclosure. The circuitry 120 includes projection data receiving circuitry 310, feature enhancement circuitry 320, target time point determination circuitry 330, and partial image reconstruction circuitry 340.

The projection data receiving circuitry 310 obtains the projection data from the projection data acquiring circuitry 110, and sends the obtained data to the feature enhancement circuitry 320.

The feature enhancement circuitry 320 applies feature enhancement to the projection data to generate feature-enhanced projection data, and sends the feature-enhanced projection data to the partial image reconstruction circuitry 340. Feature enhancement can be achieved through high-pass filtering, derivation operations, or other similar methods. This process extracts critical features, such as high frequency information in the projection data. As a result, the edges of anatomical or physiologic structures within the imaging object can be emphasized in the reconstructed partial images.

For instance, in the reconstructed partial images, structural edges can be more apparent. Without such feature enhancement, it can be challenging to detect motion in regions with uniform contrast. However, motion near edges can cause noticeable blurring. By enhancing these features, the motion within the imaging object becomes more detectable, making it easier to identify and quantify.

The target time point determination circuitry 330 receives inputs from the operator of the CT imaging system, and determines the target time point *Tᵣ* based on the inputs. For instance, a radiologist can manually select a particular phase (e.g., 50%, 75%, etc.) of a cardiac cycle for which the motion-corrected image is to be generated. The target time point determination circuitry 330 can determine a time point in accordance with this specified phase, as the target time point *Tᵣ.*

The partial image reconstruction circuitry 340 receives both the feature-enhanced projection data and the target time point *Tᵣ.* Two time periods of the same length can be determined, one on either side of the target time point *Tᵣ.* For instance, the length of each time period can correspond to the imaging range that covers a half scan of the CT imaging system. Alternatively, the length of these time periods can be determined based on specific features present in the partial images, ensuring the time periods are sufficient to cover the imaging range related to the features. For example, one time period is selected to cover a half of the imaging range of the features, and the other time period is selected to cover the opposing half the imaging range.

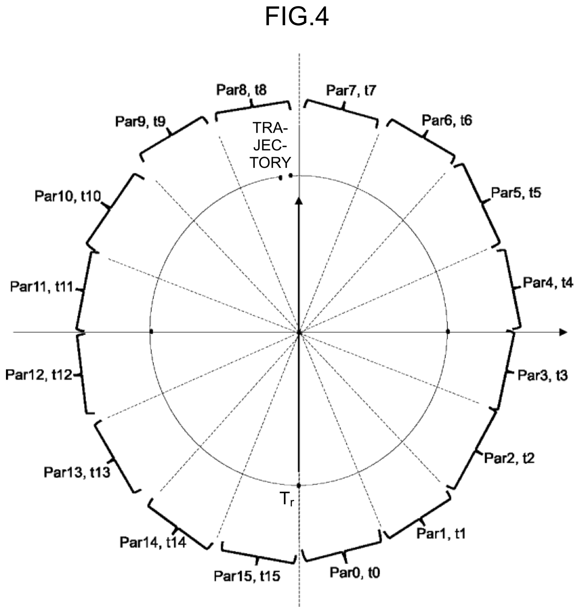

FIG. 4 shows an example of reconstructing partial images in accordance with embodiments of the disclosure. As illustrated, two time periods, each corresponding to 180° of imaging range, are symmetrically arranged on either side of the target time point *Tᵣ.* For instance, one time period can be immediately before the target time point *Tᵣ,* and the other time period can be immediately after the target time point *Tᵣ.* Note that the arrangement shown in FIG. 4 is not limiting, and it is possible to use time periods covering other degrees than 180° and maintain a time interval between each time period and the target time point *Tᵣ.*

Then, each time period is further divided into multiple smaller time intervals. FIG. 4 shows that the right-side time period is evenly divided into eight intervals t0, t1, ... t7, while the left-side time period is evenly divided into eight intervals t8, t9, ... t15. As each time interval represents a short duration, it is assumed that no motion occurs within the intervals, while motion may occur between the intervals.

Once these time intervals are established, the corresponding feature-enhanced projection data can be identified. Using the feature-enhanced projection data, multiple partial images can be reconstructed for the respective time intervals. In the example of FIG. 4, one group of partial images (Par0, Par1, ... Par7) corresponds to the time period before the target time point *Tᵣ,* while the other group of partial images (Par8, Par9, ..., Par15) corresponds to the time period after the target time point *Tᵣ.* Unlike conventional partial images, these feature-enhanced partial images include feature maps that highlights the edges and high frequency details of the imaging object, providing a more reliable basis for motion estimation and compensation.

In the example shown in FIG. 4, each partial image is reconstructed using only 1/16 of the projection data of a full rotation, significantly improving the temporal resolution. The number (16, in this example) of the partial images is illustrative and not limiting. More or fewer partial images can be reconstructed as needed for specific applications.

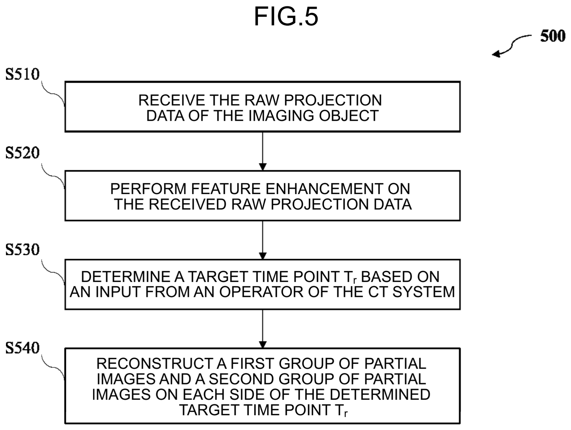

FIG. 5 shows a flow chart of an exemplary procedure 500 for reconstructing feature-enhanced partial images in accordance with embodiments of the disclosure. In step S510, the raw projection data of the imaging object is received. In step S520, feature enhancement is performed on the received raw projection data. In step S530, the target time point *Tᵣ* is determined based on the inputs from the CT imaging system's operator. In step S540, a first group of partial images and a second group of partial images are reconstructed on each side of the determined target time point *Tᵣ,* using the feature-enhanced projection data.

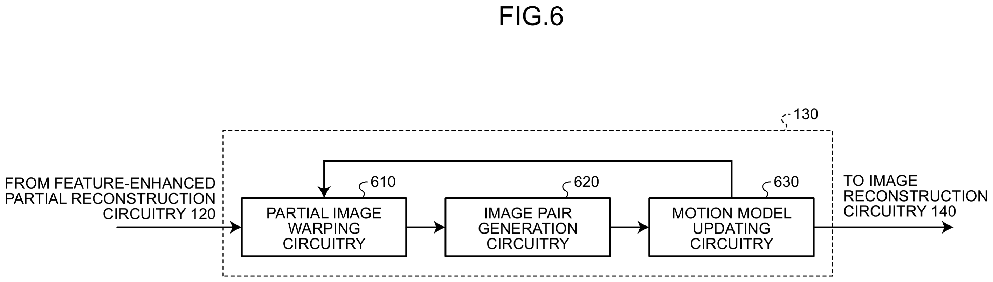

FIG. 6 shows a block diagram of motion vector field estimation circuitry 130 in accordance with embodiments of the disclosure. The circuitry 130 includes partial image warping circuitry 610, image pair generation circuitry 620, and motion model updating circuitry 630.

In embodiments of the disclosure, a four-dimensional (4D) motion model is used to characterize the motion of the imaging object. At any given time point t, the motion of the imaging object is represented by a motion vector field MVF(x, y, z, t), where (x, y, z) denotes the spatial coordinates of the voxels within the imaging object.

Thus, for the example shown in FIG. 4, the motion corresponding to the 16 partial images can be obtained as 16 motion vector fields, MVF(x, y, z, t0), MVF(x, y, z, t1),..., MVF(x, y, z, t15).

Based on these motion vector fields, the partial image warping circuitry 610 warps the partial images Par0, Par1, ..., Par15, respectively, generating 16 warped partial images. Specifically, each partial image is warped according to its corresponding motion vector field, i.e., Par0(*x̅ +mvf*(*x,y,zt*0)), Par1(*x̅ + mvf*(*x, y, z, t*1)), *...,* Par15(*̅x̅*̅ + *mvf*(*x, y*, *z*, t15)). By warping each pixel of the partial images to new spatial positions calculated using the motion vector fields, the motion in the partial images is corrected. The warped partial images are then sent to the image pair generation circuitry 620.

Using the warped partial images received from the partial image warping circuitry 610, the image pair generation circuitry 620 generates an image pair, im0 and im1, for optimizing the parameters of the motion model. The generated image pair is then sent to the motion model updating circuitry 630.

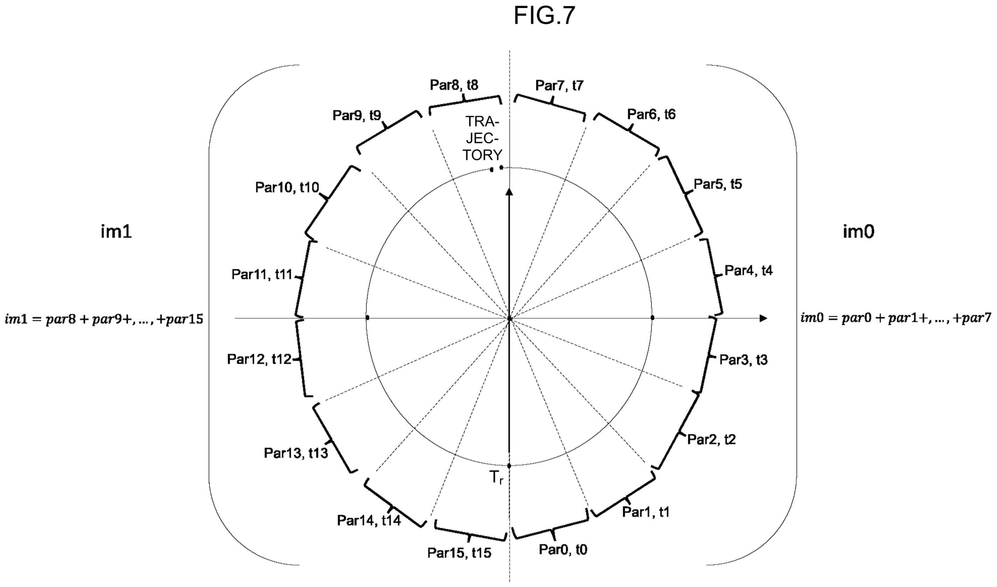

FIG. 7 shows an example of generating the image pair in accordance with embodiments of the disclosure. For instance, the first image im0 is obtained by summing the warped partial images Par0-Par7: $im 0 = par 0 + par 1 + , … , + par 7$ Similarly, the second image im1 is obtained by summing the warped partial images Par8-Par15: $im 1 = par 8 + par 9 + , … , + par 15$ These two images form an image pair used for optimizing the motion model parameters.

Based on a loss function used for image registration between the images im0 and im1, the motion model updating circuitry 630 adjusts the parameters of the motion model and sends the adjusted motion model to the partial image warping circuitry 610. The motion model parameters can be refined through the iterative operations of the circuitry 610, 620, and 630. The motion model updating circuitry 630 sets, for a first iteration, the parameter of the motion model at a predefined initial value.

Since cardiac motion is smooth, the movement of any voxel can be approximated using a smooth fitting function. Moreover, using multiple smaller partial images allows for the use of advanced non-linear motion models, such as high-order polynomial functions, B-spline functions, etc.

For example, the smooth movement of a voxel at a specific position (x₀, y₀, z₀) can be modelled using a cubic polynomial function: $MVF \left(t\right) = {at}^{3} + {bt}^{2} + ct + d$ Thus, the motion estimation problem transforms into an optimization problem, where the goal is to determine the coefficients *a, b, c,* and d through image registration between the images im0 and im1. Various types of loss functions can be used to measure the difference between im0 and im1, without specific restrictions on the form of the loss function used in the image registration.

When im0 sufficiently matches im1, the coefficients of the polynomial function are finalized. At this point, the motion model updating circuitry 630 stops further updates to the motion model, and calculates a motion vector field for the target time point *Tᵣ* based on the finalized motion model. The estimated motion vector field is then output to the image reconstruction circuitry 140. Using this estimated motion vector field and the raw projection data, the image reconstruction circuitry 140 reconstructs a motion-corrected image of the imaging object.

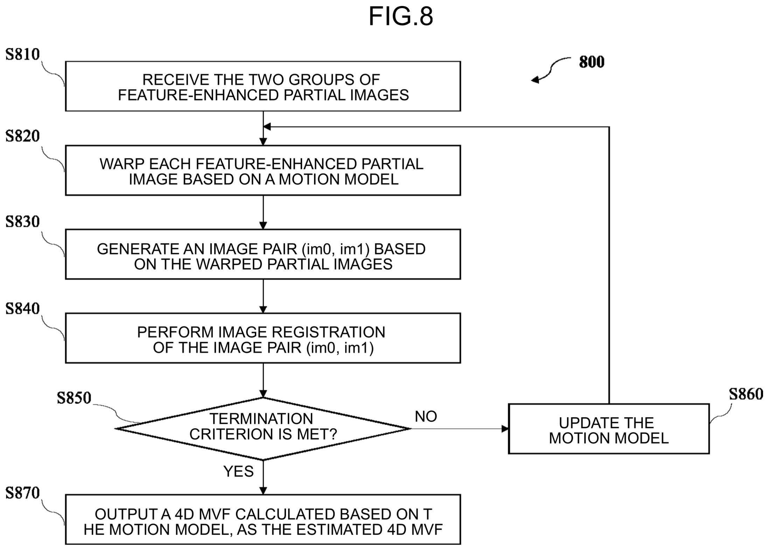

FIG. 8 shows a flow chart of an exemplary procedure 800 for estimating the motion vector field in accordance with embodiments of the disclosure. In step S810, two groups of feature-enhanced partial images are received. In step S820, the feature-enhanced partial images are warped based on the motion model. In step S830, an image pair (im0 and im1) is generated based on the warped partial images. In step S840, image registration of the image pair (im0 and im1) is performed to optimize the parameters of the motion model. In step S850, it is determined whether a predetermined termination criterion has been met. If the termination criterion is not met, in step S860, the motion model is updated, and the process returns to step S820. Once the termination criterion is met, in step S860, the motion model is finalized, and a motion vector field (4D MVF) is calculated for the target time point *Tᵣ* based on the finalized motion model, and the calculated motion vector field is output, as the estimated motion vector field.

For instance, the termination criterion can be that the loss function for the image registration converges to a predefined threshold, or that the number of iterations of steps S820-860 reaches a predefined value. For example, the updates can stop when the iteration count reaches 200.

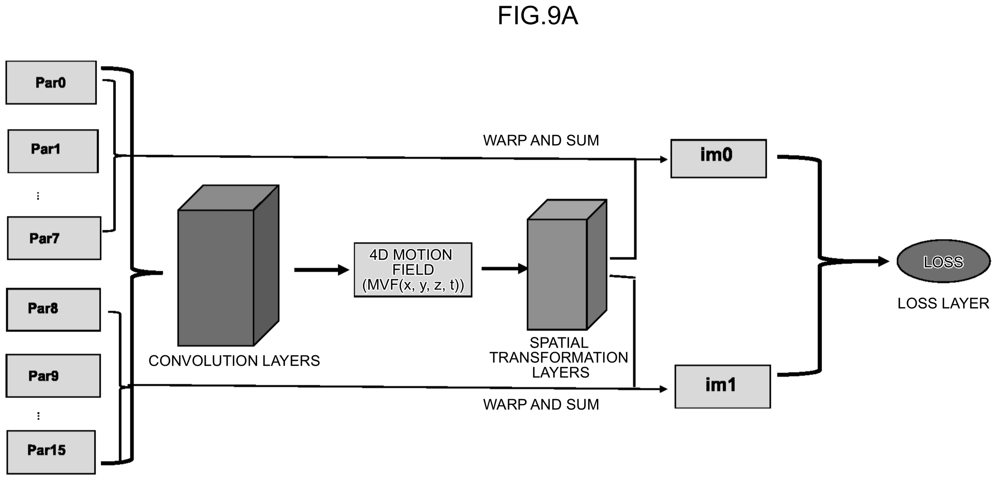

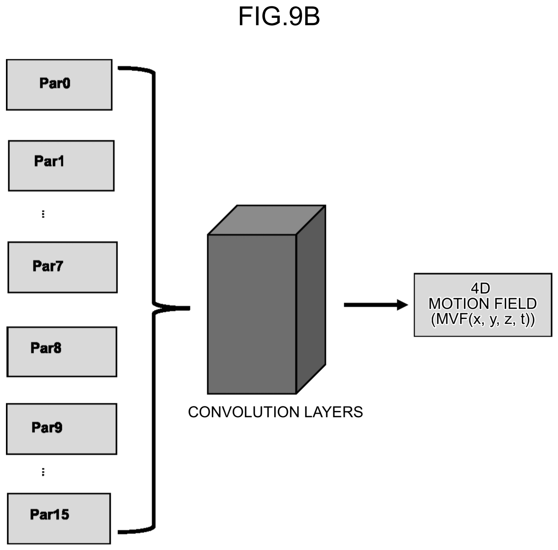

The estimation of a motion vector field for the target time point *Tᵣ* can be achieved through a neural network. FIGs. 9A and 9B show a scenario where a neural network is used for motion vector field estimation, in accordance with embodiments of the disclosure. The neural network includes one or more convolution layers, one or more spatial transformation layers, and at least one loss layer, for example.

An exemplary training procedure of the neural network is illustrated in FIG. 9A. The convolution layers provide motion vector fields for the time points t0-t15 to the spatial transformation layers. Based on these motion vector fields, the spatial transformation layers warp and sum the partial images Par0-Par15, to generate an image pair, im0 and im1. The loss layer obtains a registration loss, which quantifies the difference between im0 and im1. Based on the registration loss, weights of the convolution layers are updated. Through this training process, the neural network learns a mapping relationship between two groups of partial images (Par0-Par7; Par8-Par15) on either side of a target time point *Tᵣ* and the motion vector field of the target time point *Tᵣ.* As shown in FIG. 9B, an inferred motion vector field of the target time point *Tᵣ* can be output from the trained convolution layers, for use in motion-free image reconstruction.

Computational efficiency can be further enhanced by using a pre-trained neural network. For example, the neural network can be pre-trained on data scanned from an imaging object and subsequently applied in motion compensation for that imaging object or another imaging object. More preferably, the neural network can be pre-trained on data scanned from a large number of imaging objects (for example, over 100) to capture as much variety as possible. This approach can significantly improve processing speed.

The approaches described in this disclosure are particularly suited for whole-heart motion correction. Especially, using multiple small partial images provides distinct benefits over conventional methods that rely on a pair of large partial images.

Firstly, by dividing the projection data into smaller segments, each partial image is reconstructed with a limited amount of data, resulting in a much higher temporal resolution and effectively minimizing motion artifacts within each partial image. For instance, as shown in FIG. 4, only about 20 degrees of projection data is used for each partial image reconstruction, significantly improving the temporal resolution. In contrast, reconstructing a pair of large partial images causes each partial image to cover a broader data range, which introduces motion within the partial images and degrades the accuracy of subsequent image registration.

Secondly, the use of multiple small partial images enables the implementation of advanced non-linear motion models, such as high-order polynomials or B-spline models. Conversely, conventional approaches typically rely on linear motion models, which are often inadequate in clinical settings.

Additionally, data utilization is improved with the multiple smaller partial image approach. Due to motion artifacts, conventional methods typically fail to fully utilize data acquired from one entire rotation. In contrast, the multiple small partial image approach allows for the use of all available data, without compromising image registration. For example, as shown in FIG. 4, projection data from the entire rotation can be effectively used to reconstructed 16 partial images.

While the disclosure is described in the context of cardiac CT imaging, the concepts disclosed are applicable to motion estimation and compensation for other anatomic regions, including, but not limited to lung imaging.

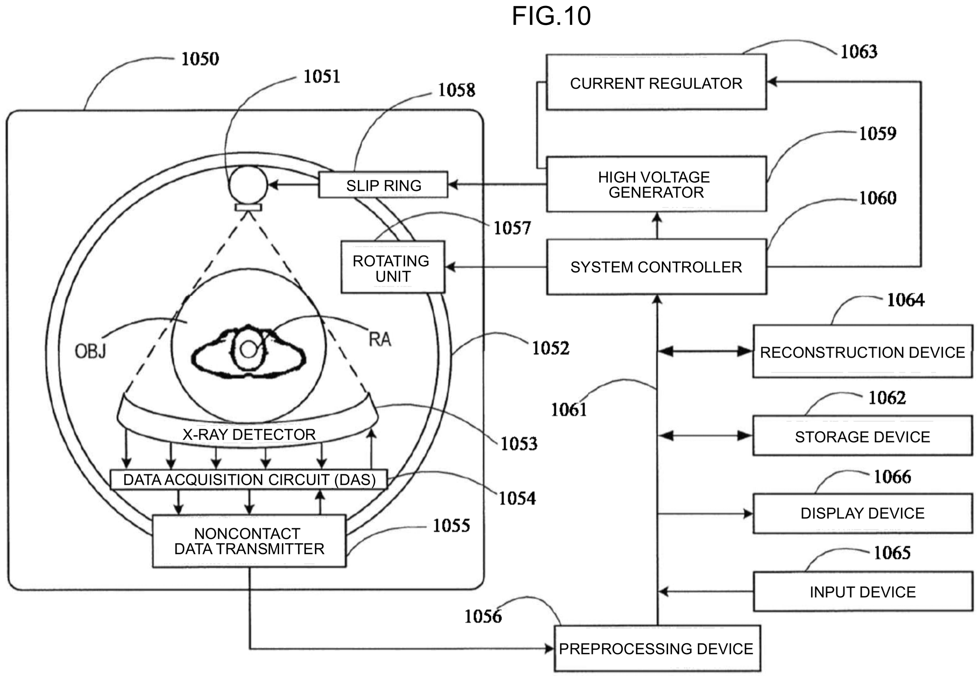

FIG. 10 is a schematic block diagram of a CT imaging system (for example, X-ray CT apparatus or scanner), according to one embodiment of the present disclosure. As shown in FIG. 10, a radiography gantry 1050 is illustrated from a side view and further includes an X-ray tube 1051, an annular frame 1052, and a multi-row or two-dimensional-array-type X-ray detector 1053. The X-ray tube 1051 and X-ray detector 1053 are diametrically mounted across an object OBJ on the annular frame 1052, which is rotatably supported around a rotation axis RA. A rotating unit 1057 rotates the annular frame 1052 at a high speed, such as 0.275 sec/rotation, while the object OBJ is being moved along the axis RA into or out of the illustrated page.

An embodiment of an CT imaging system according to the present disclosure will be described below with reference to the views of the accompanying drawing. Note that CT imaging system include various types of apparatuses, e.g., a rotate/rotate-type apparatus in which an X-ray tube and X-ray detector rotate together around an object to be examined, and a stationary/rotate-type apparatus in which many detection elements are arrayed in the form of a ring or plane, and only an X-ray tube rotates around an object to be examined. The present disclosure can be applied to either type. In this case, the rotate/rotate-type, which is currently the mainstream, will be exemplified.

The CT imaging system (for example, multi-slice X-ray CT apparatus) further includes a high voltage generator 1059 that generates a tube voltage applied to the X-ray tube 1051 through a slip ring 1058 so that the X-ray tube 1051 generates X-rays. The X-rays are emitted towards the object OBJ, whose cross-sectional area is represented by a circle. For example, the X-ray tube 1051 having an average X-ray energy during a first scan that is less than an average X-ray energy during a second scan. Thus, two or more scans can be obtained corresponding to different X-ray energies. The X-ray detector 1053 is located at an opposite side from the X-ray tube 1051 across the object OBJ for detecting the emitted X-rays that have transmitted through the object OBJ. The X-ray detector 1053 further includes individual detector elements or units.

The CT imaging system further includes other devices for processing the detected signals from the X-ray detector 1053. A data acquisition circuit or a Data Acquisition System (DAS) 1054 converts a signal output from the X-ray detector 1053 for each channel into a voltage signal, amplifies the signal, and further converts the signal into a digital signal. The X-ray detector 1053 and the DAS 1054 are configured to handle a predetermined total number of projections per rotation (TPPR).

The above-described data is sent to a preprocessing device 1356, which is housed in a console outside the radiography gantry 1050 through a non-contact data transmitter 1355. The preprocessing device 1056 performs certain corrections, such as sensitivity correction, on the raw data. A storage device 1062 stores the resultant data, which is also called projection data at a stage immediately before reconstruction processing. The storage device 1062 is connected to a system controller 1060 through a data/control bus 1061, together with a reconstruction device 1064, input device 1065, and display 1066. The system controller 1060 controls a current regulator 1063 that limits the current to a level sufficient for driving the CT system.

The detectors are rotated and/or fixed with respect to the patient among various generations of the CT scanner systems. In one implementation, the above-described CT system can be an example of a combined third-generation geometry and fourth-generation geometry system. In the third-generation system, the X-ray tube 1051 and the X-ray detector 1053 are diametrically mounted on the annular frame 1052 and are rotated around the object OBJ as the annular frame 1052 is rotated about the rotation axis RA. In the fourth-generation geometry system, the detectors are fixedly placed around the patient and an X-ray tube rotates around the patient. In an alternative embodiment, the radiography gantry 1050 has multiple detectors arranged on the annular frame 1052, which is supported by a C-arm and a stand.

The storage device 1062 can store the measurement value representative of the irradiance of the X-rays at the X-ray detector unit 1053. Further, the storage device 1062 can store a dedicated program for executing the CT image reconstruction, material decomposition, and motion estimation and motion compensation methods including the methods described herein.

The reconstruction device 1064 can execute the above-referenced methods, described herein. Further, reconstruction device 1064 can execute pre-reconstruction processing image processing such as volume rendering processing and image difference processing as needed.

The pre-reconstruction processing of the projection data performed by the preprocessing device 1056 can include correcting for detector calibrations, detector nonlinearities, and polar effects, for example.

Post-reconstruction processing performed by the reconstruction device 1064 can include filtering and smoothing the image, volume rendering processing, and image difference processing, as needed. The image reconstruction process can be performed using filtered back projection, iterative image reconstruction methods, or stochastic image reconstruction methods. The reconstruction device 1064 can use the memory to store, e.g., projection data, reconstructed images, calibration data and parameters, and computer programs.

The reconstruction device 1064 can include a CPU (processing circuitry) that can be implemented as discrete logic gates, as an Application Specific Integrated Circuit (ASIC), a Field Programmable Gate Array (FPGA) or other Complex Programmable Logic Device (CPLD). An FPGA or CPLD implementation may be coded in VDHL, Verilog, or any other hardware description language and the code may be stored in an electronic memory directly within the FPGA or CPLD, or as a separate electronic memory. Further, the storage device 1062 can be non-volatile, such as ROM, EPROM, EEPROM or FLASH memory. The storage device 1062 can also be volatile, such as static or dynamic RAM, and a processor, such as a microcontroller or microprocessor, can be provided to manage the electronic memory as well as the interaction between the FPGA or CPLD and the memory.

Alternatively, the CPU in the reconstruction device 1064 can execute a computer program including a set of computer-readable instructions that perform the functions described herein, the program being stored in any of the above-described non-transitory electronic memories and/or a hard disc drive, CD, DVD, FLASH drive or any other known storage media. Further, the computer-readable instructions may be provided as a utility application, background daemon, or component of an operating system, or combination thereof, executing in conjunction with a processor, such as a Xeon processor from Intel of America or an Opteron processor from AMD of America and an operating system, such as Microsoft 10, UNIX, Solaris, LINUX, Apple, MAC-OS and other operating systems known to those skilled in the art. Further, CPU can be implemented as multiple processors cooperatively working in parallel to perform the instructions.

In one implementation, the reconstructed images can be displayed on a display 1366. The display 1066 can be an LCD display, CRT display, plasma display, OLED, LED or any other display known in the art.

The storage device 1062 can be a hard disk drive, CD-ROM drive, DVD drive, FLASH drive, RAM, ROM or any other electronic storage known in the art.

According to at least one of the embodiments described above, it is possible to improve accuracy in motion compensation.

Numerous modifications and variations of the embodiments presented herein are possible in light of the above teachings. It is therefore to be understood that within the scope of the claims, the application may be practiced otherwise than as specifically described herein. The inventions are not limited to the examples that have just been described; it is in particular possible to combine features of the illustrated examples with one another in variants that have not been illustrated.

## Claims

1. A motion compensation apparatus (100) for performing motion compensation in a computed tomography imaging system, the motion compensation apparatus comprising:
an acquisition unit (110) configured to acquire projection data scanned from an imaging object by the computed tomography imaging system;
a determination unit (120) configured to determine a target time point for which a motion-corrected image of the imaging object is to be reconstructed;
a first reconstruction unit (120) configured to reconstruct a first group of feature-enhanced partial images and a second group of feature-enhanced partial images, based on, respectively, a first set of the projection data and a second set of the projection data, the first and second sets of the projection data being on opposite sides of the determined target time point;
a estimation unit (130) configured to estimate a motion vector field for the determined target time point, based on the reconstructed first group of feature-enhanced partial images and the reconstructed second group of feature-enhanced partial images; and
a second reconstruction unit (140) configured to perform, based on the estimated motion vector field, motion compensation on the acquired projection data to reconstruct an image of the imaging object, as the motion-corrected image for the determined target time point.

2. The motion compensation apparatus (100) of claim 1, wherein the first reconstruction unit (120) is further configured to reconstruct the first group of feature-enhanced partial images and the second group of feature-enhanced partial images by:
performing feature enhancement on the acquired projection data to enhance feature information in the acquired projection data to generate feature-enhanced projection data, wherein the feature information corresponds to an edge of a physiologic structure of the imaging object,
determining a first time period before the determined target time point and a second time period after the determined target time point, wherein the second time period has a same length as the first time period,
separating the first time period into a first plurality of time intervals, and the second time period into a second plurality of time intervals,
performing partial reconstruction using the featured-enhanced projection data associated with each time interval of the first plurality of time intervals, to generate a first plurality of partial images, as the first group of feature-enhanced partial images, wherein each partial image of the first plurality of partial images corresponds to a different time interval of the first plurality of time intervals,
performing partial reconstruction using the featured-enhanced projection data associated with each time interval of the second plurality of time intervals, to generate a second plurality of partial images, as the second group of feature-enhanced partial images, wherein each partial image of the second plurality of partial images corresponds to a different time interval of the second plurality of time intervals.

3. The motion compensation apparatus (100) of claim 2, wherein the first reconstruction unit (120) is further configured to conduct high-pass filtering on the acquired projection data, or conduct a derivation operation on the acquired projection data, to enhance the feature information in the acquired projection data.

4. The motion compensation apparatus (100) of claim 2, wherein the first reconstruction unit (120) is further configured to set the length of the first time period to a predefined length.

5. The motion compensation apparatus (100) of claim 3, wherein the first reconstruction unit (120) is further configured to set the length of the first time period based on the enhanced feature information.

6. The motion compensation apparatus (100) of claim 1, wherein the first reconstruction unit (120) is further configured to determine the target time point by:
from a user of the computed tomography imaging system, receiving an input indicating for which phase of a motion cycle of the imaging object the motion-corrected image is to be reconstructed, and
determining the target time point based on the received input.

7. The motion compensation apparatus (100) of claim 2, wherein the estimation unit (130) is further configured to estimate the motion vector field by:
iteratively performing until a predefined termination criterion is met:
based on a motion model, warping the first plurality of partial images to generate a first plurality of warped partial images,
based on the motion model, warping the second plurality of partial images to generate a second plurality of warped partial images,
combining the first plurality of warped partial images to obtain a first image,
combining the second plurality of warped partial images to obtain a second image, and
updating a parameter of the motion model, based on a loss function calculated based on an image registration between the first image and the second image, and
outputting a motion vector field derived based on the updated motion model, as the estimated motion vector field.

8. The motion compensation apparatus (100) of claim 7, wherein the estimation unit (130) is further configured to set, for a first iteration, the parameter of the motion model at a predefined initial value.

9. The motion compensation apparatus (100) of claim 7, wherein the estimation unit (130) is further configured to use a particular motion model constructed based on a polynomial function or a B-spline function, as the motion model.

10. The motion compensation apparatus (100) of claim 7, wherein the estimation unit (130) is further configured to estimate the motion vector field by:
inputting the first plurality of partial images and the second plurality of partial images into a neural network to train the neural network, and
obtaining a motion vector field inferred for the determined target time point by the trained neural network, as the estimated motion vector field.

11. A motion compensation method for performing motion compensation in a computed tomography imaging system, comprising:
a step of acquiring projection data scanned from an imaging object by the computed tomography imaging system;
a step of determining a target time point for which a motion-corrected image of the imaging object is to be reconstructed;
a step of reconstructing a first group of feature-enhanced partial images and a second group of feature-enhanced partial images, based on, respectively, a first set of the projection data and a second set of the projection data, the first and second sets of the projection data being on opposite sides of the determined target time point;
a step of estimating a motion vector field for the determined target time point, based on the reconstructed first group of feature-enhanced partial images and the reconstructed second group of feature-enhanced partial images; and
a step of performing, based on the estimated motion vector field, motion compensation on the acquired projection data to reconstruct an image of the imaging object, as the motion-corrected image for the determined target time point.
